Europäisches Patentamt

(19) **European Patent Office**

**Office européen des brevets**

(11) Publication number: **0 118 966**
**B1**

(12) **EUROPEAN PATENT SPECIFICATION**

(45) Date of publication of the patent specification: **27.08.86**

(51) Int. Cl.⁴: **H 02 M 5/257**, H 02 M 7/537, H 02 J 9/06

(21) Application number: **84200377.4**

(22) Date of filing: **14.03.84**

(54) AC voltage stabilizer easily convertible into uninterruptible power supply (UPS).

(30) Priority: **14.03.83 NL 8300923**

(43) Date of publication of application:
**19.09.84 Bulletin 84/38**

(45) Publication of the grant of the patent:
**27.08.86 Bulletin 86/35**

(84) Designated Contracting States:
**BE DE FR GB IT NL**

(56) References cited:
**EP - A - 0 061 744**
**DE - A - 2 559 333**
**DE - A - 3 109 750**
**US - A - 3 825 815**

(73) Proprietor: **Stoet, Hindrik, Laan van Leeuwesteijn 58, NL-2271 HL Voorburg (NL)**

(72) Inventor: **Stoet, Hindrik, Laan van Leeuwesteijn 58, NL-2271 HL Voorburg (NL)**

(74) Representative: **Urbanus, Henricus Maria, Ir. et al, c/o Vereenigde Octrooibureaux Nieuwe Parklaan 107, NL-2587 BP 's-Gravenhage (NL)**

ACTORUM AG

# Description

The invention relates to an AC voltage stabilizer easily convertible into uninterruptible power supply (UPS).

Background of the invention.

Of all AC voltage stabilizers nowadays commercially available, the pure electronic AC voltage stabilizer features the most precise and fastest regulation and has the lowest distortion on its output wave form. The conventional electronic AC stabilizer, however, tends to a certain complexity, which makes it the most expensive and often also the most inefficient stabilizing means because of the substantial power losses inherent in the system. Even an overall efficiency as low as 50% is difficult to achieve in practice.

Summary of the invention.

In accordance with the present invention, an AC stabilizer is provided that supplies stable, «clean» AC power, even when the network that is feeding it, is unstable and distorted. This type of stable, sinusoidal voltage is highly recommended for computers and other sorts of sensitive electronic equipment.

The basic part of the apparatus according to the invention is a conventional push pull power amplifier output stage. According to the invention the power is applied to it in a special way. This will become apparent by comparing the conventional push pull output stage with that of the invention, supposing both have a sinusoidal signal applied to the input.

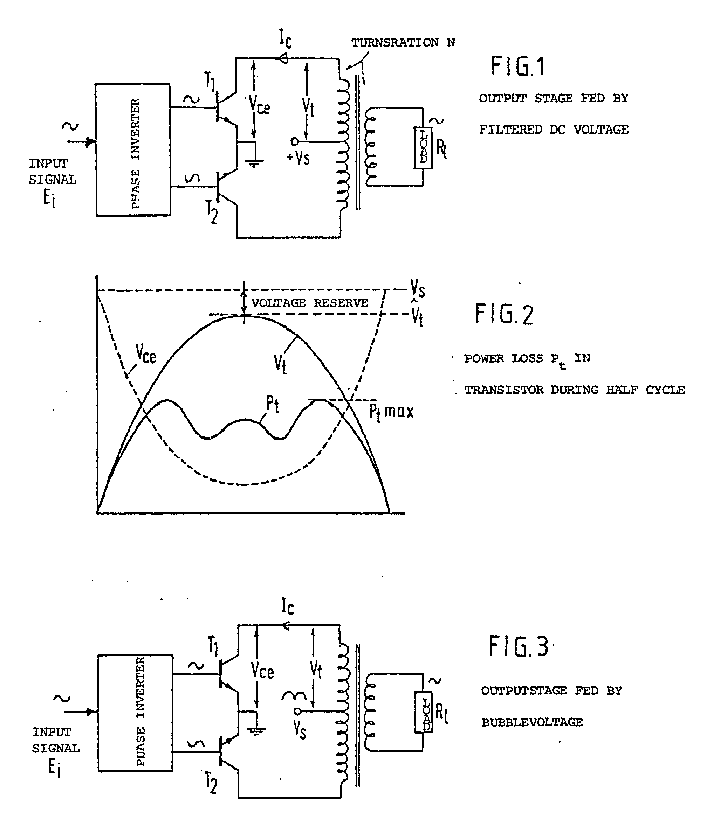

Fig. 1 shows such a conventional push pull power output stage receiving a filteres low ripple DC supply voltage Vs. The voltage across either transistor T1 or T2 at a certain time will have the form of Vce in Fig. 2, being the difference between the filtered DC voltage Vs and the voltage Vt across the appropriate half of the output transformer. The other transistor does not conduct during this half cycle.

Assuming a resistive load RL, which is transformed by the primary half of the transformer to $N^2$ RL, the current through transistors T1 and T2 will have a half sinewave shape and will be proportional to Vt, so $IC = \dfrac{Vt}{N^2\,RL}$. The power loss in the transistors during their half cycles is shown by the curve Pt in Fig. 2. Pt Max, being the maximum loss over the half cycle, depends on the difference between Vs and Vt. This difference is called the voltage reserve. In practice the maximum dissipation will mostly occur somewhere in the slopes of the half sinewave, even when a non-resistive load is applied to the output stage. With non-resistive, or non-linear loads being applied, the transistor current will no longer be proportional to the transformer voltage, and efficiency will be reduced even more.

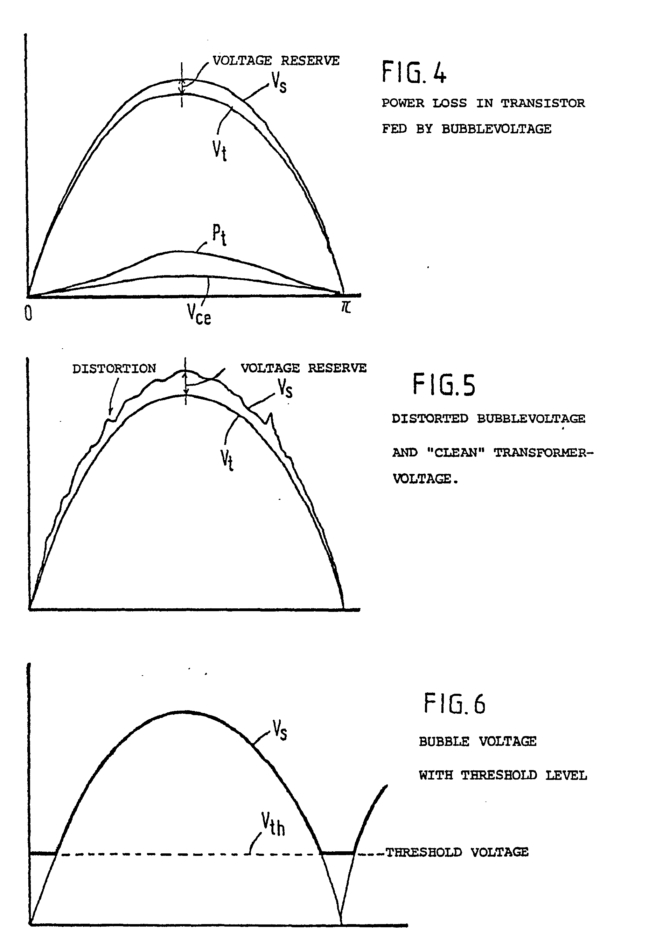

The present invention makes use of a totally different supply voltage to the output stage. This supply voltage is shown in Fig. 4 and has the shape of a series of half sinewaves, further to be called «bubble voltage».

The EP-A-0 061 744 discloses an inverter operating at subsonic frequencies, which is also fed by an unfiltered mains voltage. The frequency of this «bubble voltage» is much lower than the inverter frequency and both frequencies are not phaselocked.

In Fig. 4 one full cycle of the bubble voltage is shown as Vs and the voltage across the transformer half is depicted as Vt. The voltage Vce across the transistor is the difference between Vs and Vt and hence also a half sinewave. The value of Vce is equal to or less than the voltage reserve and never exceeds this value during the cycle. This means that the power loss in the transistors, especially with non-linear or non-resistive loads, will be much less than that of the previously described conventional output stage (see Fig. 1 and 2).

In theory the efficiency of the above output stage according to the invention can be 100% when Vs = Vt, but in practice it will be less than 100% for the following reasons.

The transistors T1 and T2 in Fig. 3 need the voltage reserve across their collector emitter junction in order to operate as amplifiers (see Fig. 5).

In case the bubble voltage is not an ideal half sinewave there must be some reserve to ensure a clean voltage across the transformer primary and hence across the load. This means there is some dissipation in the transistors.

Furthermore it is recommended to maintain a certain voltage level at the zero crossing in order to prevent reactions of the load back-firing into the output transformer. Therefore a threshold voltage level is introduced which prevents the bubble voltage from becoming zero, thus ensuring a finite output impedance at the zero crossing (see Fig. 6). These precautions bring the practical efficiency of the output stage with bubble voltage supply down to approximately 85%, which is nevertheless substantially higher than that of the conventional DC-fed output stage of Fig. 1.

A major condition for the good operation of such an output stage is for the input signal to be equal in frequency and phase to the feeding bubble voltage, so the signal generator must be phase-locked to the bubble voltage frequency.

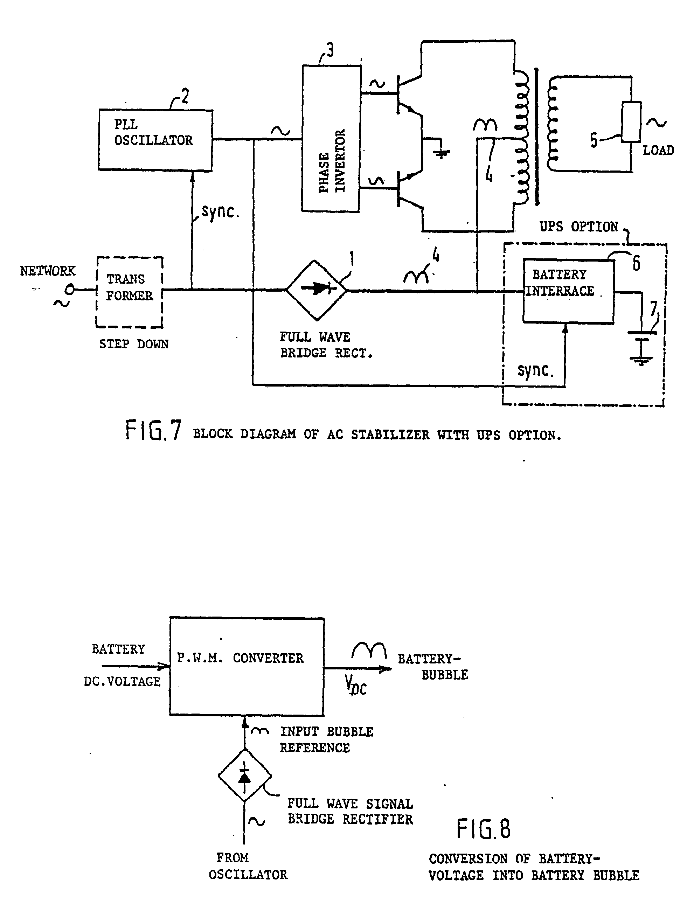

The simpliest form of a circuit in accordance with the invention is shown in Fig. 7. The bubble voltage is simply created by full wave rectifying the network voltage (if necessary transformed down by a step-down transformer), by means of bridge 1, without the voltage being smoothed by a filter capacitor. The output signal of bridge 1 is called the network bubble voltage. The oscillator 2 is a phase locked loop oscillator which is locked to the network frequency so that the output signal of the phase inverter 3, being the input signal of the power stage fits snugly into the bubble voltage 4, resulting in a sineware output voltage across resistive load 5, which is independent of the value of Vs, provided Vs is higher than Vt.

Below the level of Vt the amplifier output voltage will linearly follow the level of Vs. The system is then inoperative, the output signal showing same distortion as the bubble voltage Vs. The AC voltage stabilizer can be transferred into a true UPS — uninterruptible power supply — by adding a battery 7 via a battery interface 6. The battery interface is shown in Fig. 8. Although even a simple semiconductor element — like a transistor or SCR — can function as an interface to the output stage when the momentary value of the network bubble is too low, the more elaborate way of using a PWM (pulse width modulated) converter is chosen because of the inherent smoother action when switching from network to battery operation and vice versa. The PWM converter receives a bubble voltage as a reference, obtained from rectification of the oscillator sinewave signal by means of a full wave bridge rectifier.

The output of the battery interface is changed into a battery bubble voltage, which is in phase with the network bubble voltage, and which is capable of supplying the necessary current to the amplifier output stage.

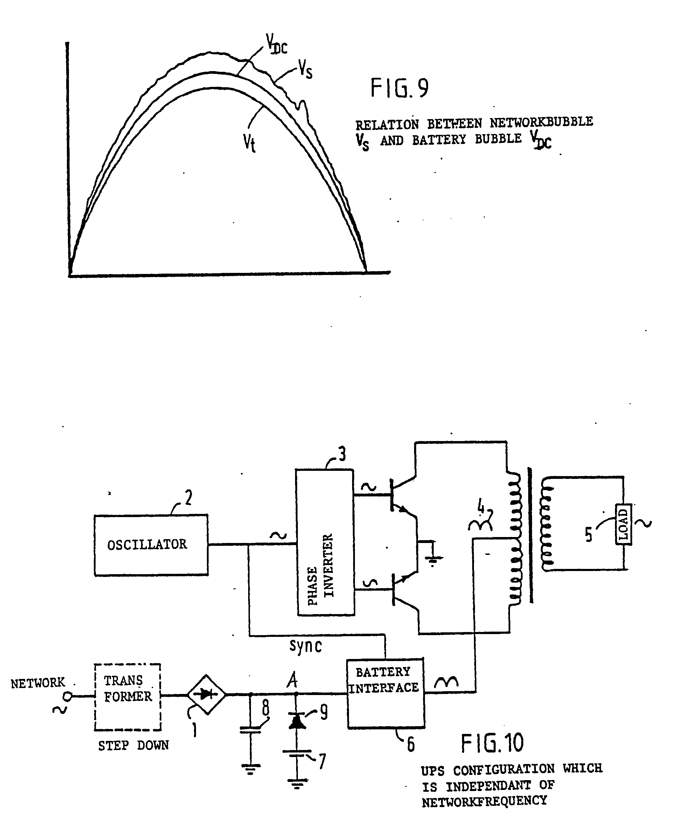

The peak value of the battery bubble voltage $V_{DC}$ will be equal to the minimum value of the network bubble voltage (level at low network voltage). (See Fig. 9). As soon as Vs becomes too low because of low network voltage and reaches the value of $V_{DC}$, the battery bubble $V_{DC}$ will take over, not affecting Vt, which means that the output voltage of the power amplifier remains constant. The battery has taken over and delivers its current to the power amplifier through the battery interface. The difference in voltage between $V_{DC}$ and Vt will be as small as possible ensuring maximum efficiency during battery operation. During network operation the value of Vs and Vt is a measure for the losses in the amplifier output stage. In case of high network voltage the efficiency of the power amplifier is lower, although still considerably higher than that of the conventional power amplifier earlier described. A limitation of the above described Ac regulator/UPS which makes use of the network bubble voltage lies in the imperative synchronisation to the network frequency. Upon return from battery operation to network operation this will cause a slight output frequency deviation during the locking, which may disturb certain synchronous motor loads.

A configuration that does not suffer from above inconvenience is given in Fig. 10. There is no need for synchronisation to the network frequency, as the oscillator determines the frequency at which the system is operating. After an eventual step down, the network voltage is rectified by rectifier bridge 1 and buffered by a filter capacitor 8 in order to get a smooth DC voltage with low-ripple at point A in Fig. 10. The battery voltage is connected through a diode to the same point A, which permits the battery to take over immediately when the DC voltage from the network is lower than the battery-voltage, creating an uninterrupible DC voltage at point A, which is supplied to the battery interface. This battery interface transforms the DC voltage into a bubble voltage under the control of the oscillator (see Fig. 8), which bubble voltage is supplied to the power amplifier output stage.

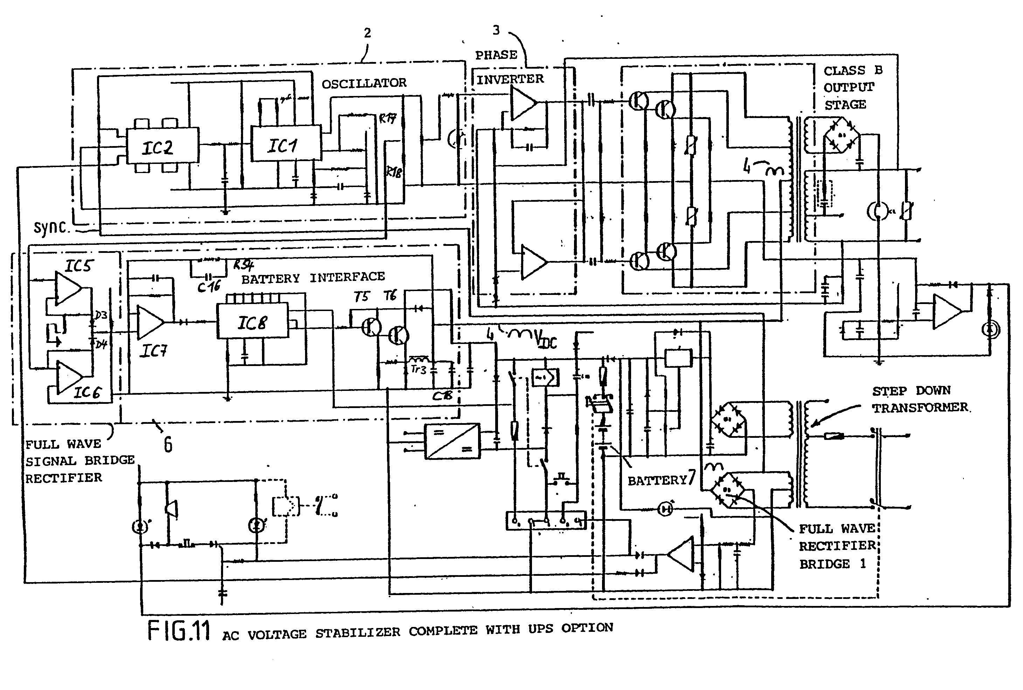

There is no imperative need for a synchronization to the network frequency, although it can be done if the load so requires. Due to the high efficiency of the PWM battery-interface — which can be 85% in practive — there is not much loss in overall efficiency in the system under normal network conditions. At high network voltage the battery bubble system has a better efficiency than the network bubble system previously described. A detailed circuit diagram is shown in Fig. 11. This is a complete AC-stabilizer with UPS facility, which functions in the network bubble operation mode. The network voltage is stepped down to a value of appr. 17V AC and full wave rectified to a bubble voltage with appr. 24 Volts peak value (Vs = 24). This network bubble voltage is fed to the class B output stage, consisting of two pairs of power transistors connected in Darlington configuration. The oscillator 2, consisting of a phase locked loop (IC 1) and a programmable oscillator (IC 2) which are connected in a feedback loop, generates the input signal for the entire embodiment. This sinusoidal signal is fed through optocoupler OC to the phase inverter which is of the floating paraphrase or seesaw type. The synchronization to the network is accomplished by taking a signal from the transformer secondary and connecting it to the phase locked loop IC 1 via resistor R4.

From the oscillator a signal is derived via voltage divider R17/R18 as an input for the battery interface. This signal is electronically full wave rectified by IC 5, IC 6 and diodes D3 and D4 and fed to the PWM converter as a reference (Fig. 8). This reference voltage is amplified by operational amplifier IC 7 and applied to IC 8, which converts this signal into a pulse width modulated high frequency signal of about 20 KHz, to be applied to the power transistor pair T5/T6, which receive their supply from the battery 7. The signal obtained is integrated by choke coil Tr3 and capacitor C18. The resulting waveform is a bubble voltage ($V_{DC}$ in Fig. 9) of stable amplitude thanks to the feedback via R54/C16. This amplitude is equal to the «network low» value of the network bubble voltage (Vs in Fig. 9). In the normal network condition the power to the class B output stage will come from network bubble Vs as this is higher than battery bubble $V_{DC}$ and the latter will only be available as a shadow behind Vs.

## Claims

1. An electronic AC stabilizer for supplying stable and clean power to a load section (5) comprising a push pull power amplifier (T1, T2) output stage which is powered by a full wave rectified sinewave voltage — hereafter called network bubble voltage — said bubble voltage being obtained by full wave rectification of the network voltage feeding said stabilizer, the signal input of the stabilizer being delivered by a phase locked loop oscillator (2) which is synchronized to the frequency of said network voltage in such a way that the voltage over the transistors (T1, T2) of said push pull power amplifier output stage is synchronous with said bubble voltage resulting in a very low power loss over said power amplifier output stage.

2. The apparatus of claim 1 wherein a battery (7) is connected to the said push pull power amplifier output stage by intermediary of a battery interface (6) that consists of a semiconductor device, said device being triggered to conduct when the said network voltage is below a certain level in such a way that said stabilizer is transformed into an uninterruptible power supply.

3. The apparatus of claim 1 wherein a battery (7) is connected to the said push pull power amplifier output stage by intermediary of a battery interface (6) that consists of a pulse width modulated converter (8) which converts the battery DC voltage into a waveshape that resembles a full wave rectified sinewave — the battery bubble voltage — that is in phase with said network bubble voltage but so much lower in amplitude that it will take over the voltage supply to said push pull amplifier output stage when said network voltage is below a certain level, said stabilizer thus being transformed into a high efficiency uninterruptible power supply.

4. An electronic AC power stabilizer for supplying stable and clean power to a load section (5) comprising a push pull power amplifier output stage, which is powered by a voltage having waveshape that resembles a full wave rectified sinewave — hereafter called feeding bubble voltage — said bubble voltage being obtained by full wave rectifying and filtering of the network voltage that is feeding said stabilizer and converting the smooth DC voltage into said feeding bubble voltage by a pulse width modulated converter, said converter receiving a reference signal obtained by full wave rectifying a sine-wave signal from a sine-wave oscillator that it also connected to the signal input of the said push pull power amplifier output stage, so ensuring a very low power loss over said power amplifier output stage.

5. The apparatus of claim 4 wherein a battery (8) is connected to the said smooth DC voltage by intermediary of a diode (9) in such a way that the battery takes over when said DC voltage is below the battery voltage, transforming said stabilizer into a high efficiency uninterruptible power supply.

**Patentansprüche**

1. Elektronischer Wechselstromleistungsstabilisator zur Lieferung einer stabilen und unverzerrten Leistung an ein Lastglied (5), versehen mit einer Gegentakt-Leistungsverstärker(T1, T2)-Endstufe, die durch eine doppelgleichgerichtete sinusförmige Spannung — im folgenden Netzbrummspannung genannt — betrieben wird, welche Netzbrummspannung durch Doppelgleichrichtung der den Stabilisator speisenden Netzspannung erhalten wird, wobei die Signaleinspeisung des Stabilisators durch einen Oszillator (2), dessen Schleife phasenverriegelt ist, bewirkt wird, welcher Oszillator mit der Frequenz der genannten Netzspannung derart synchronisiert ist, dass die Spannung über die Transistoren (T1, T2) der Gegentakt-Leistungsverstärker-Endstufe synchron mit der Netzbrummspannung ist, die in einem sehr niedrigen Leistungsverlust über die Leistungsverstärker-Endstufe resultiert.

2. Vorrichtung nach Anspruch 1, in der eine Batterie (7) durch Vermittlung einer Batteriegrenzschicht (6), bestehend aus einer Halbleitervorrichtung, mit der Gegentakt-Leistungsverstärker-Endstufe verbunden ist, welche Halbleitervorrichtung getriggert wird, um, wenn die Netzspannung unter einem bestimmten Pegel liegt, derart zu leiten, dass der Stabilisator in eine ununterbrechbare Stromzuführung umgewandelt wird.

3. Vorrichtung nach Anspruch 1, in der eine Batterie (7) durch Vermittlung einer Batteriegrenzschicht (6), bestehend aus einem pulsbreitenmodulierten Wandler (8), mit der Gegentakt-Leistungsverstärker-Endstufe verbunden ist, welcher Wandler die Batteriegleichstromspannung in eine Wellenform umwandelt, die einer doppelgleichgerichteten Sinusform gleicht — die Batteriebrummspannung — die in Phase mit der Netzbrummspannung, aber soviel niedriger in Amplitude ist, dass sie die Spannungslieferung an die Gegentakt-Leistungsverstärker-Endstufe übernimmt, wenn die Netzspannung unter einem bestimmten Pegel liegt, wobei der Stabilisator so in eine ununterbrechbare Hochleistungsstromzuführung umgewandelt wird.

4. Elektronischer Wechselstromleistungsstabilisator zur Lieferung einer stabilen und unverzerrten Leistung an ein Lastglied (5), versehen mit einer Gegentakt-Leistungsverstärker-Endstufe, die durch eine Spannung mit einer Wellenform, die einer doppelgleichgerichteten Sinusform gleicht — im folgenden Speisebrummspannung genannt — betrieben wird, welche Brummspannung erhalten wird durch Doppelgleichrichtung und Filterung der den Stabilisator speisenden Netzspannung und Umwandlung der gefilterten Gleichstromspannung in die Speisebrummspannung durch einen pulsbreitmodulierten Wandler, der ein Bezugssignal empfängt, das durch Doppelgleichrichten eines sinusförmigen Signals aus einem sinusförmigen Oszillator erhalten wird, der auch mit der Signaleinspeisung der Gegentakt-Leistungsverstärker-Endstufe verbunden ist und so einen sehr niedrigen Leistungsverlust über die Leistungsverstärker-Endstufe sicherstellt.

5. Vorrichtung nach Anspruch 4, in der eine Batterie (8) durch Vermittlung einer Diode (9) mit der gefilterten Gleichstromspannung derart verbunden ist, dass die Batterie die Spannungslieferung übernimmt, wenn die Gleichstromspannung unter der Batteriespannung liegt, wobei sie den Stabilisator in eine Hochleistungsstromzuführung umwandelt.

**Revendications**

1. Un stabilisateur électronique de courant alternatif pour l'alimentation de puissance stable et non distorsionnée a une section de charge 5, comprenant un circuit de sortie d'amplificateur de puissance push pull T1, T2, alimenté par une tension sinusoïdale redressée à deux alternances — à nommer ci-après tension d'ondulation ('bubble') de réseau — ladite tension d'ondulation ('bubble') étant obtenue par redressement plein-onde de la tension de réseau alimentant ledit stabilisateur, l'entrée du signal du stabilisateur étant délivrée par un oscillateur à boucle à blocage de phase 2 [PLL] synchronisé à la fréquence de ladite tension de réseau de telle façon que la tension sur les transistors T1, T2 dudit circuit de sortie d'amplificateur de puissance push pull est synchrone à ladite tension d'ondulation, résultant en une perte de puissance légère sur ledit circuit de sortie d'amplificateur de puissance.

4

2. L'appareil selon la revendication 1, dans lequel un accumulateur F est connecté audit circuit de sortie d'amplificateur de puissance psh-pull à l'aide d'une interface d'accumulateur 6 composée d'un dispositif semiconducteur étant déclenché pour conduire lorsque ladite tension de réseau est au-dessous d'un certain niveau de telle façon que ledit stabilisateur est transformé en une alimentation ininterrompue.

3. L'appareil selon la revendication 1, dans lequel un accumulateur 7 est connecté audit circuit de sortie d'amplificateur de puissance push pull par l'intermédiaire d'une interface d'accumulateur 6 composée d'un convertisseur modulé par durée d'impulsion 8 convertissant la tension continue de l'accumulateur en une forme d'onde ressemblant à une onde sinusoïdale redressée à deux alternances — la tension d'ondulation de l'accumulateur ('bubble') — étant en phase avec ladite tension d'ondulation de réseau ('bubble') mais d'une amplitude si basse à reprendre l'alimentation en tension audit circuit de sortie d'amplificateur push pull lorsque ladite tension de réseau est au-dessous d'un certain niveau, ainsi transformant ledit stabilisateur en une alimentation ininterrompue à haut rendement.

4. Un stabilisateur électronique de courant alternatif pour l'alimentation de puissance stable et non distorsionnée à une section de charge 5, comprenant un circuit de sortie d'amplificateur de puissance push pull alimenté par une tension ayant une forme d'onde ressemblant à une onde sinusoïdale redressée à deux alternances — nommée ci-sprès tension d'ondulation ('bubble') d'alimentation —, ladite tension d'ondulation étant obtenue par redressement pleine-onde et filtrage de la tension de réseau alimentant ledit stabilisateur et convertissant la tension continue filtrée en ladite tension d'ondulation d'alimentation par un convertisseur modulé par durée d'impulsion, ledit convertisseur recevant un signal de référence obtenu par le redressement pleine-onde d'un signal sinusoïdal d'un oscillateur sinusoïdal également connecté à l'entrée du signal dudit circuit de sortie d'amplificateur de puissance push pull, ainsi assurant une perte de puissance légère sur ledit circuit de sortie d'amplificateur de puissance.

5. L'appareil selon la revendication 4, dans lequel un accumulateur 8 est connecté à ladite tension continue filtrée par l'intermédiaire d'une diode 9 de telle façon que l'accumulateur reprend lorsque ladite tension continue est au-dessous de la tension de l'accumulateur, ainsi transformant ledit stabilisateur en une alimentation ininterrompue à haut rendement.

$I_c$

TURNSRATION N

# FIG.1

OUTPUT STAGE FED BY

FILTERED DC VOLTAGE

$T_1$

$V_{ce}$

$V_t$

INPUT
SIGNAL
$E_i$

PHASE INVERTER

$+V_s$

LOAD $R_l$

$T_2$

$V_s$

$\hat{V}_t$

VOLTAGE RESERVE

# FIG.2

POWER LOSS $P_t$ IN

TRANSISTOR DURING HALF CYCLE

$V_{ce}$

$V_t$

$P_t$

$P_t$ max

$I_c$

# FIG.3

OUTPUTSTAGE FED BY

BUBBLEVOLTAGE

$T_1$

$V_{ce}$

$V_t$

INPUT
SIGNAL
$E_i$

PHASE INVERTER

$V_s$

LOAD $R_l$

$T_2$

FIG. 4

POWER LOSS IN TRANSISTOR
FED BY BUBBLEVOLTAGE

FIG.5

DISTORTED BUBBLEVOLTAGE
AND "CLEAN" TRANSFORMER-
VOLTAGE.

FIG.6

BUBBLE VOLTAGE
WITH THRESHOLD LEVEL

9

FIG.7 BLOCK DIAGRAM OF AC STABILIZER WITH UPS OPTION.

FIG.8

CONVERSION OF BATTERY-
VOLTAGE INTO BATTERY BUBBLE

FIG. 9

RELATION BETWEEN NETWORKBUBBLE
$V_S$ AND BATTERY BUBBLE $V_{DC}$

FIG. 10

UPS CONFIGURATION WHICH
IS INDEPENDANT OF
NETWORKFREQUENCY

13

FIG.11 AC VOLTAGE STABILIZER COMPLETE WITH UPS OPTION